# EUROPEAN PATENT SPECIFICATION

(11) **EP 2 085 306 B1**
(45) Date of publication and mention of the grant of the patent: **28.07.2010**
(21) Application number: 08020115.5
(22) Date of filing: 18.11.2008
(51) Int. Cl.: B62K 19/46, B62J 17/06

(54) **Scooter type vehicle having a storage box structure**
Rollerartiges Fahrzeug mit einer Aufbewahrungsbehälterstruktur
Véhicule de type scooter comprenant une structure de boîte de stockage

(30) Priority: 31.01.2008 JP 2008022184
(43) Date of publication of application: 05.08.2009
(73) Proprietor: Honda Motor Co., Ltd., Minato-ku Tokyo 107-8556 (JP)
(72) Inventor: Kitayama, Kyosuke, Wako-shi Saitama 351-0193 (JP); Atsuchi, Michio, Wako-shi Saitama 351-0193 (JP); Shimoji, Tomotake, Wako-shi Saitama 351-0193 (JP); Okada, Naoki, Wako-shi Saitama 351-0193 (JP)
(74) Representative: Liska, Horst

(56) References cited:
- JP-A- 3 186 487
- JP-A- 2006 124 998
- JP-A- 2006 256 497

## Description

### Technical Field

The present invention relates to a scooter type vehicle having a storage box structure and, in particular, to a storage box structure whose inside can easily be viewed by a rider and whose capacity can be increased.

### Background Art

A scooter type vehicle having a storage box structure according to the preamble of claim 1 is known from JP 3186487 A.

JP 2006-256497 A discloses a motorcycle comprising a leg shield ahead of a rider and a front cover ahead of a head pipe. A storage chamber is arranged in the space between the front cover and the leg shield and extends in a forwardly upward direction from an opening portion arranged at the leg shield toward an upper part of the front cover so as to cross an axis of the head pipe in a side view. An opening for accessing the storage chamber opens to the left side of the vehicle, and a lid for covering the opening portion is opened toward the front side of the vehicle. Moreover, as can be seen in Fig. 6 of this document, the side ends of the opening portion of the storage box are arranged within the same plane.

JP 2006-124998 A discloses a storage box structure for a scooter type vehicle in which a storage box is disposed above a leg shield to open upwardly to the rear side of the vehicle to form an opening portion covered by a lid in an openable and closable manner. According to Figs. 1 and 2 of this document, the opening portion of the storage box is arranged such that all side ends of the opening portion are arranged in a forwardly inclined flat plane.

There are known further scooter type vehicle storage box structures in which a storage box is provided inside a leg shield to open rearward of a vehicle and in which a storage box is disposed above a leg shield to open upward (refer to patent documents Japanese Patent Nos. JP 3737332 and JP 3854184).

### Problem to be Solved by the Invention

The storage box structure in which the storage box provided inside the leg shield to open rearward of the vehicle can easily ensure a lager storage capacity without being affected by an instrument and the like disposed on the upper portion of the leg shield. However, since the opening of the storage box faces the rearward, there is a problem in that it is difficult to recognize the inside of the storage box through a rider's visual line from above.

On the other hand, the storage box structure in which a storage box is disposed above the leg shield to open upward has a merit that the inside of the storage box can easily be recognized from above. However, it is difficult to ensure the large storage capacity compared with the above-mentioned storage box structure due to the influences of instruments and of a handlebar.

It is an object of the invention to provide a scooter type vehicle comprising a pair of left and right storage boxes, provided in a body cover and covered by a pair of left and right lids, and a maintenance lid which is provided below the body cover and near a horizontal center of the vehicle body, which can ensure a large storage capacity while making it easy to recognize the inside of the storage boxes and avoiding interference between the three lids when they are simultaneously opened.

### Means for Solving the Problem

This object is achieved by a scooter type vehicle having the features of claim 1.

In addition, a preferred embodiment of the invention of claim 2 is characterized in that an auxiliary instrument constituting a vehicle body part is disposed near the right storage box inside the body cover, a maintenance opening aiming to maintain the auxiliary instrument is formed around the opening portion of the right storage box, and also the maintenance opening is covered along with the opening portion of the right storage box by the right lid having an area larger than an opening area of the maintenance opening.

Furthermore, a preferred embodiment of the invention of claim 3 is characterized in that the auxiliary instrument is a liquid tank and the maintenance opening at which a filler opening is located is disposed in an inclined surface close to the upper surface side end of the opening portion of the right storage box.

Furthermore, a preferred embodiment of the invention of claim 4 is characterized in that the lids opening and closing the opening portions of the storage boxes are doubly-composed of an inner lid with a sealing surface and an outer lid being an ornamental member.

### Effect of the Invention

According to the invention of claim 1, since the upper surface end of the storage box is recessed and the lower surface is inclined forwardly downwardly, the storage box can ensure a large storage capacity while making it easy to recognize the inside of the storage box from above.

Furthermore, the lower portion of the storage box is allowed to recede forward of the vehicle to form the opening portion of the inside of the storage box in a generally doglegged shape while suppressing interference with a foot encountered when an occupant mounts on or dismounts from the vehicle. Thus, the storage capacity can be maximized.

Furthermore, the respective opposite edges of the left and right lids opening to approach the centrally-located maintenance lid are formed to bend outwardly toward the opening side leading end. Therefore, even if both the lid of the storage box and maintenance lid are opened together, they can be made not to interfere with each other.

According to the preferred embodiment of the invention of claim 2, since the maintenance opening for the auxiliary instrument located around the storage box is covered by use of the box lid, a special maintenance lid becomes unnecessary and the maintenance opening is not exposed to the external appearance of the vehicle, which may not probably degrade the external appearance.

According to the preferred embodiment of the invention of claim 3, since the maintenance opening of the filler opening is disposed in the inclined surface, it can be disposed to open upward, which facilitates oil feeding.

According to the preferred embodiment of the invention of claim 4, since the lid is configured as the dual structure, it has both sealing performance and ornamentation and can be formed with ease.

### Brief Description of the Drawings

Fig. 1 is a lateral view of a scooter type motorcycle according to an embodiment.
Fig. 2 is a schematic exploded view of constituent parts of a body cover which covers the rear surface side of a front cover.
Fig. 3 illustrates an inner cover as viewed from the rearward of a vehicle body with a left outer lid opened.
Fig. 4 illustrates the rear surface side of the inner cover with each led omitted.
Fig. 5 is a left lateral view of the inner cover.
Fig. 6 is a cross-sectional view taken along line 6-6 of Fig. 4.
Fig. 7 is a lateral view of an outer lid used on the left side.
Fig. 8 illustrates the outer lid as viewed from arrow A in Fig. 7.
Fig. 9 is a lateral view of an inner lid.
Fig. 10 illustrates the inner lid as viewed from arrow A of Fig. 9.
Fig. 11 is a perspective view illustrating an opening circumferential wall portion with the lids omitted.
Fig. 12 is a perspective view illustrating an engagement state of a button of an opener.
Fig. 13 is a perspective of a key lock mechanism.
Fig. 14 illustrates the button as viewed from above.
Fig. 15 is a cross-sectional view of an opener taken along line 15-15 of Fig. 11.
Fig. 16 illustrates a hinge mechanism of a filler opening lid.
Fig. 17 is a perspective view partially illustrating a meter cover according to another embodiment.
Fig. 18 is a perspective view of an opener mechanism according to another embodiment.
Fig. 19 is a perspective view of the opener mechanism as viewed from a different angle.

### Best Mode for Carrying Out the Invention

One embodiment will hereinafter be described with reference to the drawings.

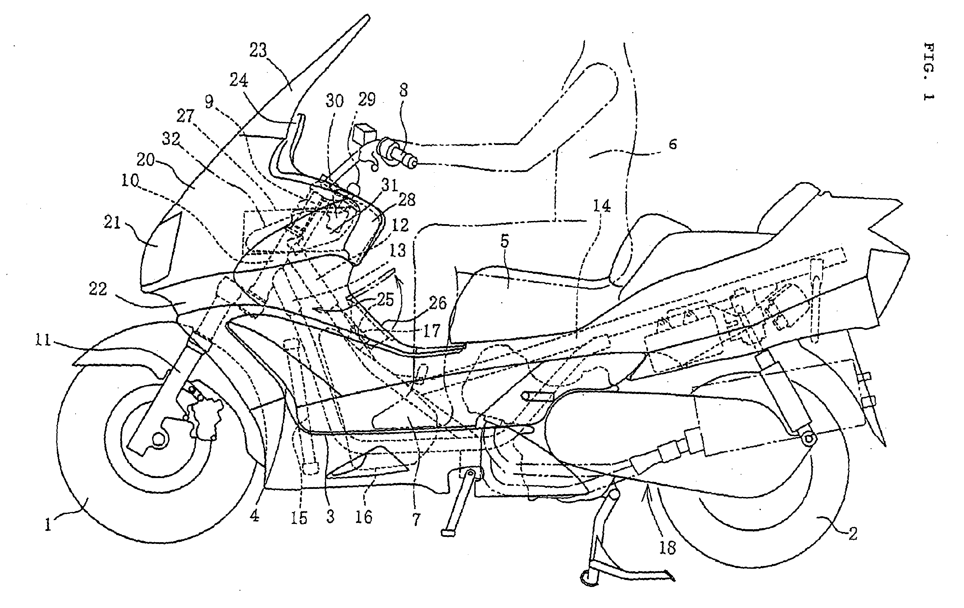

Fig. 1 depicts a lateral surface of a scooter type motorcycle of the present embodiment. This vehicle includes a low-floor type step floor 3 between a front wheel 1 and a rear wheel 2 and a leg shield 4 in front of the step floor 3. A tandem seat 5 is disposed rearward of and above the step floor 3. The feet of a rider 6 sitting on the tandem seat 5 are placed on the step floor 3.

A handlebar 8 disposed forward of the tandem seat 5 and steered by the rider 6 is connected to a handlebar shaft 9. The handlebar shaft 9 is turnably supported by a head pipe 10, which is connected to a front fork 11. Thus, the front wheel 1 supported by the front fork 11 is steered.

A front upper down pipe 12 and a front lower down pipe 13 extend obliquely downward and rearward from an upper portion and a lower portion, respectively, of the head pipe 10. A pair of left and right rear frames 14 extends obliquely upward and rearward from the vertically intermediate portion of the front upper down pipe 12 above the front lower down pipe 13.

The front lower down pipe 13 below the front upper down pipe 12 bends generally horizontally below the step floor 3 and extends rearward. The lower end of the front upper down pipe 12 is connected with the generally horizontal portion of the lower front lower down pipe 13 at a position close to the rear end of the step floor 3. The front lower down pipe 13 again extends obliquely upward and rearward and connects with the anteroposteriorly intermediate portion of the rear frame 14.

A radiator 15 is disposed forward of the front lower down pipe 13 and rearward of the front wheel 1. A vertically long fuel tank 16 is supported behind the radiator 15 by the front upper down pipe 12 and by the front lower down pipe 13.

The fuel tank 16 which is a heavy load is disposed below the step floor 3 as mentioned above. This contributes to mass concentration and to low gravity center.

A filler opening 17 of the fuel tank 16 is provided forward of the tandem seat 5. A swing type power unit 18 is swingably supported at a front end by the rear portion of the front lower down pipe 13 and has a rear end supporting the rear wheel 2.

The handlebar shaft 9 is covered from the front by a front cover 20, which carries a headlight 21 and turn signal lights 22. Reference numeral 23 denotes a windshield and 24 denotes a meter cover. An inner cover 25 is disposed behind the head pipe 10 to close the opening of the front cover 20 from the rearward of the vehicle body.

A lower portion of the inner cover 25 forms a tunnel portion. Oil is fed by opening a filler opening lid 26 provided at a partial upper surface of the tunnel portion and close to the filler opening 17.

The inner cover 25 is provided with a pair of left and right storage boxes 27 each of which cylindrically projects forward. Openings of the storage boxes 27 are formed in the rear surface of the inner cover 25. Outer lids 28 for opening and closing the openings of the storage boxes 27 are provided on rear shoulders of the inner cover 25 so as to vertically straddle them.

The inner cover 25 covers the upper portion of the front cover 20. In particular, the left storage box 27 is designed such that the outer lid 28 can be unlocked by inserting a key 29 into a key cylinder 30 through the upper surface of the left storage box 27. The key cylinder 30 is disposed at the inner cover 25.

Reference numeral 31 denotes an upper inner cover which covers the upper lateral surface of the inner cover 25 and 32 denotes a reserve tank supported in the vicinity of the storage boxes 27.

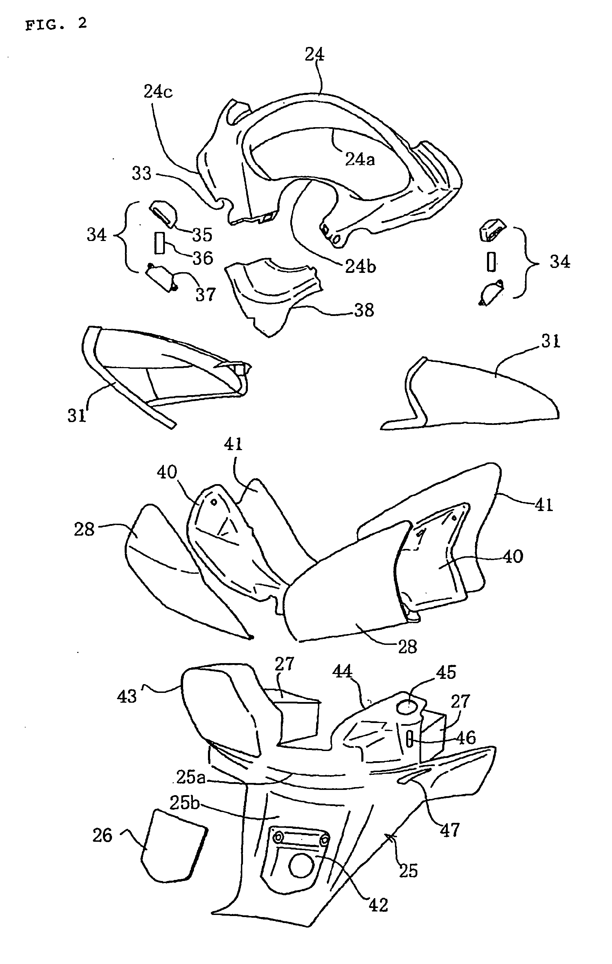

Fig. 2 is a schematic exploded view illustrating the constituent parts of the body cover that covers the handlebar shaft 9 from the rear surface side, in the body cover surrounding the head pipe 10. The body cover of this portion is composed of the meter cover 24 and the inner cover 25 below the meter cover 24.

The meter cover 24 is provided with a meter portion opening 24a faced by an instrument display section and with a handlebar post opening 24b disposed behind the meter portion opening 24a. The handlebar post opening 24b is an opening adapted to receive the handlebar post passed therethrough. A rear side portion of the circumferential portion of the handlebar post opening 24b is divided as a handlebar post cover 38. The handlebar post opening 24b is closed by the handlebar post cover 38 while the handlebar post has previously been passed through the handlebar post opening 24b.

An edge portion 24c of the meter cover 24 is provided with button notches 33 on the left and right of the rear side thereof. A button 35 serving as a knob of an opener 34 faces the button notch 33. The opener 34 is composed of a button 35, a return spring 36 and a case 37. The case 37 is attached to the rear surface of the edge portion 24c close to the button notch 33.

The inner cover 25 includes a pair of left and right upper inner covers 31 which covers the lower portion of the meter cover 24; and left and right lids which respectively covers opening circumferential walls 43, 44 of the storage boxes 27 disposed on the left and right upper portions of the inner cover 25. Each of the left and right lids includes an outer lid 28 and an inner lid 40 integrally joined with the inside of the outer lid 28.

A seal 41 is attached to each of the inner lids 40. The seal 41 is a sealing member such as an O-ring for waterproof and is adapted to prevent rainwater entering the storage box 27 through the inner lid 40.

The left and right storage boxes 27 provided on the inner cover 25 have almost the same structure. However, the left opening circumferential wall 43 has such a simple shape as to surround the opening 27a of the left storage box 27 as a circumferential wall. On the other hand, the right opening circumferential wall 44 has a peripheral wall 44a relatively broadly surrounding an opening 27b of the right storage box 27. The peripheral wall 44a is bored with an opening 27b, as well as with a maintenance window 45 for the reserve tank 32 and a liquid measure window 46 located behind and below the maintenance window 45.

The opening circumferential walls 43, 44 are members each opened or closed by a lid integrally composed of the outer lid 28 and the inner lid 40. Each lid is large enough to cover any one of the opening circumferential wall 43 and the opening circumferential wall 44 (that is, has a larger area than each area of the opening circumferential wall 43 and the opening circumferential wall 44).

The opening circumferential wall 43 and opening circumferential wall 44 are formed on the shoulder portion 25a of the inner cover 25 so as to define a generally V-shaped gap therebetween. A lower portion of the handlebar post cover 38 is put in and covers the gap.

A horizontally long slit 47 is formed immediately below the opening circumferential wall 44 and near the shoulder portion 25a. A parking brake lever not shown projects rearward from the slit 47.

A rear surface 25b of a portion below the shoulder portion 25a is formed such that an upper portion expands from side to side and a lower portion is gradually narrowed. An oil-feeding recessed portion 42 is formed in the rear surface 25b and opened and closed by the filler opening lid 26.

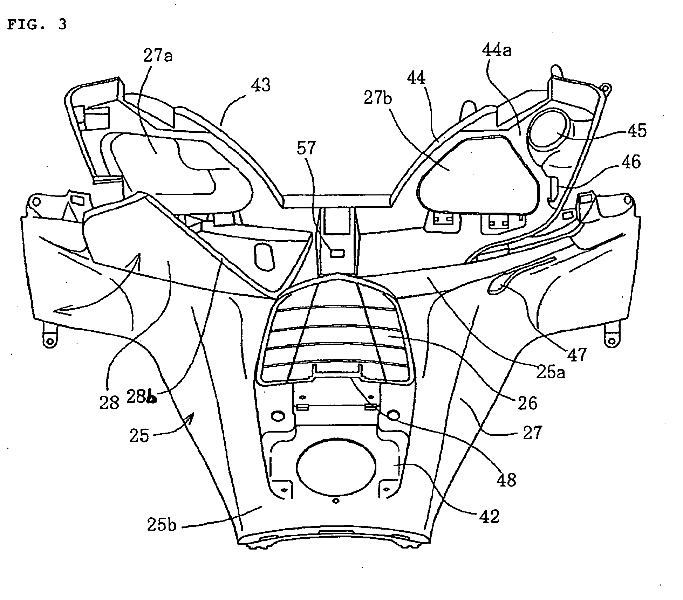

A description is next given of the storage box 27 and a lid structure with respect thereto. Fig. 3 illustrates the inner cover 25 as viewed from the rearward of the vehicle body with the left outer lid 28 opened downward. The inner lid 40 to be integrally joined with the inside of the outer lid 28 is omitted. Incidentally, the right lid is omitted.

As shown in the figure, when opened downward, the outer lid 28 is opened slightly outwardly so that a vehicle-body central portion of the internal surface thereof may be seen.

The filler opening lid 26 corresponds to the maintenance lid of the present invention and is opened by flipping up its rear side around a front hinge 48. The filler opening lid 26 is formed such that its leading end (takes the rear end side when closed) is tapered. When the outer lid 28 and the filler opening lid 26 are simultaneously opened, they will not interfere with each other because the outer lid 28 is outwardly opened.

Specifically, the filler opening lid 26 (the maintenance lid) opened and closed so as to jump upward is provided at the lower portion of the body cover and near the horizontal center of the vehicle body. The storage boxes 27 are arranged as a pair of left and right ones spaced apart from each other. Opposite lateral edges 28b of the outer lids 28 provided on the left and right storage boxes 27 bend outwardly toward the opening side end. Thus, when the outer lids 28 are opened, the vehicle body inside edges thereof will not interfere with the filler opening lid 26. In addition, the filler opening lid 26 is formed such that the left and right lateral edges approach each other as they go to the opening side end. Thus, it is possible to make it further difficult for the filler opening lid 26 to interfere with the left and right outer lids 28.

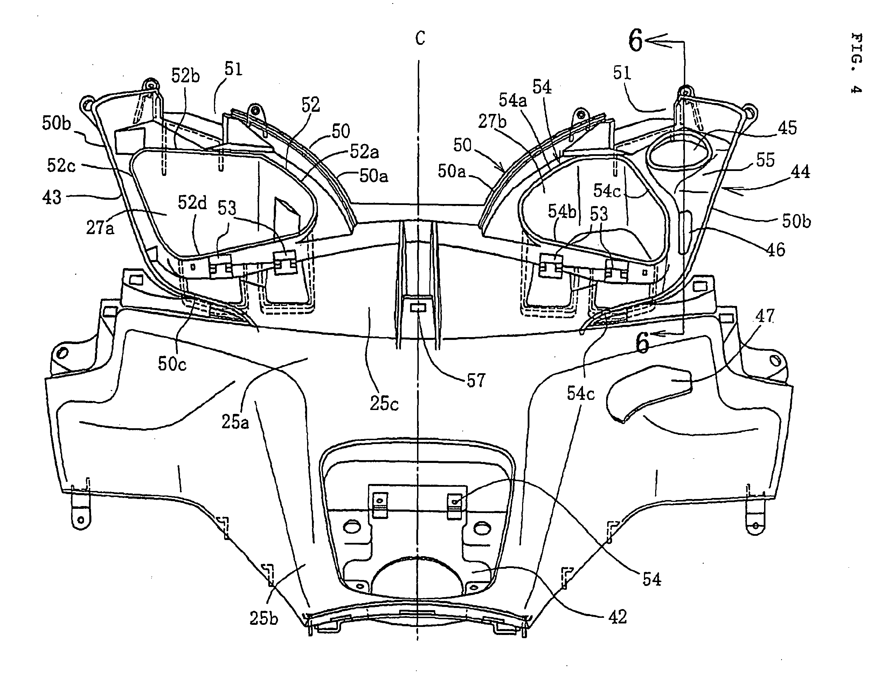

Fig. 4 illustrates the inner cover 25 as viewed from the rear side thereof with the lids omitted. An engagement portion 57 with a rib provided above the shoulder portion 25a and on the vehicle body center C is adapted to receive the lower end of the handlebar post cover 38 (Fig. 2) insertably engaged therewith. The handlebar post cover 38 can cover between the opening circumferential wall 43 and the opening circumferential wall 44.

The opening circumferential wall 43 is circumferentially covered by a rising wall 50. A notch 51 is formed at a portion, of the rising wall 50, coming into contact with the edge portion 24c (Fig. 2) of the meter cover 24 on the side of the vehicle body center C. Such a portion of the rising wall 50 is located on the upper side of the opening circumferential wall 43 and on the external side of the vehicle body. The notch 51 faces the button notch 33 (Fig. 2) so that a locking portion (describe later) of the button 35 may face the button notch 33.

The opening 27a is provided inside the rising wall 50. Its opening lip 52a is shaped in a general quadrate in which an internal (close to the vehicle center C) side 52a is short, an external side 52c is long, and an upper side 52b and a lower side 52d each have an intermediate length.

The internal side 52a is such oblique that an upper portion is inclined outwardly. The upper side 52b forms such a slope that also an outside portion is inclined upward. The external side 52c is such oblique that an upper portion is located on the external side. Also the lower side 52d is such oblique that the internal portion is located upward.

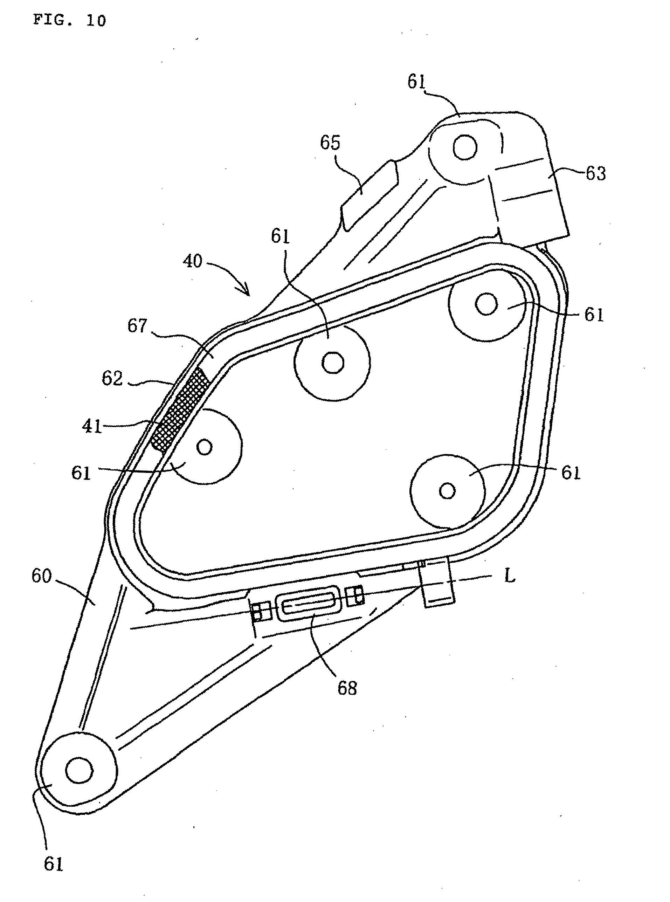

Hinge attachment portions 53 are provided on the rear surface 25c at a position below the lower side 52d and above the shoulder portion 25a. A hinge portion 68 (Fig. 10) of the inner lid 40 is attached to the hinge attachment portion 53 with a hinge shaft (pin). The hinge portion 68 will be described later.

Likewise, the right opening circumferential wall 44 has a rising wall 50, which is formed with a notch 51 at a portion thereof. However, the opening 27b is smaller than the opening 27a and is generally formed triangular. Also an opening edge portion 54 is generally formed in a triangle in which an internal side 54a is short and is such oblique that an upper portion is located on the external side.

A base 54b is long and is such oblique that an outside is low and an inside is high. An external side 52c, 54c is also long and is such oblique that an upside extends inward and a downside extends outward. That is to say, the left and right opening edge portions 52, 54 share in common the fact that the inner sides 52a, 54a are oblique and short and that the lower side 52d and the base 54b are such oblique that the inside is front and the outside is rear and are long. In addition, the hinge attachment portions 53 are provided below the base 54b. The hinge axial line of the hinge attachment portions 53 is such oblique as to be symmetrical to the left hinge axial line. Similarly, the lid is designed to be opened outwardly when opened.

The outside and inside of the opening edge portion 54 are formed with an inner wall 55 having a relatively large area because the opening 27b has a small opening area. The inner wall 55 is bored with the maintenance window 45 and with the liquid measure window 46. The maintenance window 45 is located on the upper side. The liquid measure window 46 is formed immediately below the maintenance window 45 as a vertically long hole so as to be faced by a liquid scale (not shown). Reference numeral 56 denotes a hinge attachment seat provided in the oil-feeding recessed portion 42.

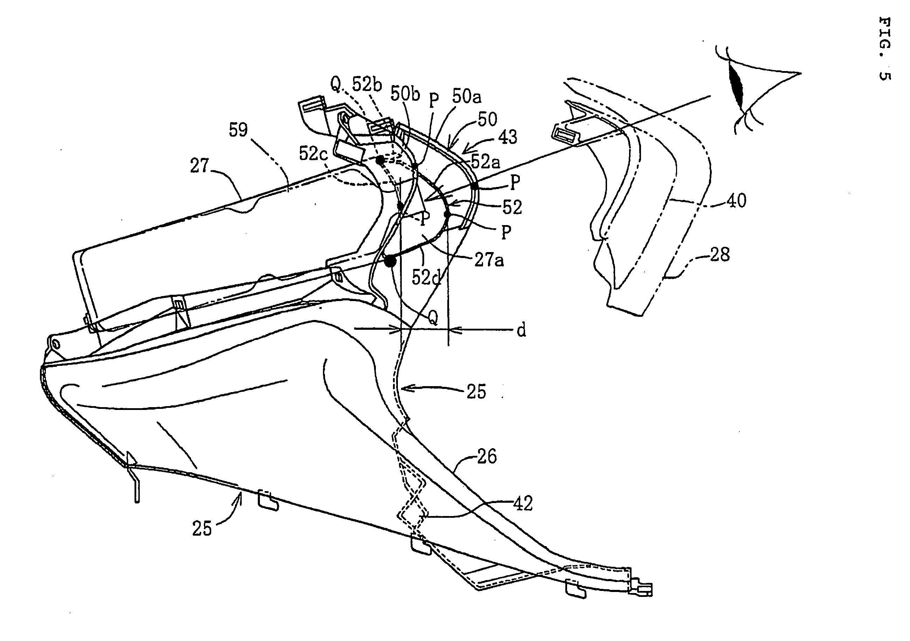

Fig. 5 illustrates the left lateral surface of the inner cover 25. Of the rising wall 50, both an inner wall 50a and an outer wall 50b are generally formed like a dogleg in which each of their intermediate portions take the most backward projecting point P. In addition, the inner wall 50a has a lager projecting amount. Consequently, the opening 27a faces the oblique backward and the outside.

Further, also the opening lip 52 bends like a dogleg in which the intermediate portion of the internal side 52a takes the most backward projecting point P. Similarly, the external side 52c bends backward in such a generally doglike manner that the most backward projecting point P is located at the intermediate portion thereof. However, this point P is located forward of the point P of the internal side 52a, a difference therebetween being d.

This shows that the position of the external opening edge portion inwardly recedes from that of the internal opening edge portion. The lower side 52d is such oblique as to extend inwardly and obliquely upwardly.

Further, in contrast to the point P, both the upper side 52b and the lower side 52d are such that the intermediate portion most inwardly recedes to a point Q. Also the position of the point Q forwardly recedes from that of the point P.

For this reason, the inside of the storage box 27 can easily be visible to the rider from the oblique upside in accordance with the receding internal side 52a.

In addition, as obvious from the figure, the storage box 27 longwise projects so as to slant forwardly and obliquely downwardly. Because of this, also the lower surface (bottom surface) of the storage box is naturally an oblique plane extending forwardly and obliquely downwardly. Thus, the storage box 27 makes it difficult for a load to fly out backwardly while ensuring a large storage capacity. In addition, the rider can easily view the deeper portion of the storage box 27.

The lower side 52d of the storage box 27 recedes forward, that is, it can be extended forward of the vehicle. This can increase a clearance relative to the knees or the like of the rider to suppress interfere with the feet when the rider mounts on or dismount from the vehicle, which can makes mounting and dismounting performance satisfactory.

In addition, as shown in the figure with imaginary lines, the outer lid 28 and of the inner lid 40 are each formed generally dogleg as viewed from the side, which contributes to ensuring the mounting and dismounting performance, as well as to increased capacity and visibility facilitation.

Since the lateral view of the opening edge portion 52 illustrating the shape of the opening portion is generally doglike, the storage capacity of the storage box 27 can be maximized while making the mounting and dismounting performance satisfactory.

A portion of the opening circumferential wall 43 below the point P is formed as an undercut inclined surface in which an upper portion more protrudes rearward as it goes upward and a lower portion recedes forward. A portion in the vicinity of the upper portion of the oil-feeding recessed portion 42 varies in inclination and becomes a lower rear surface which is formed as an obliquely upward slope. The oil-feeding recessed portion 42 opens at this slope.

As shown in Fig. 5, the left storage box is designed to be able to accommodate a 500-cc PET bottle 59 in the marketplace and to have such a lid shape that the opening of the bottle is located at the top of the doglike lateral wall.

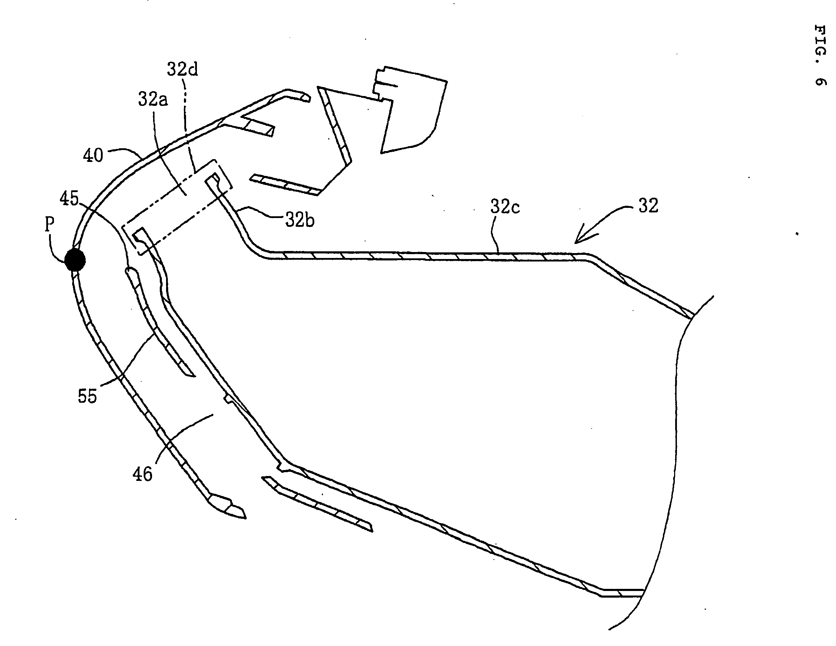

Fig. 6 is a cross-sectional view taken along line 6-6 of Fig. 4, including the inner lid 40. In the figure, the inner lid 40 is formed generally doglegged in cross-section. The maintenance window 45 is disposed in an inclined surface to open toward a portion above the point P. A fill port 32a of the reserve tank 32 faces the maintenance window 45 and a neck 32b is inclined obliquely upwardly. In this way, also the fill port 32a is located at a position obliquely upward of a generally transversely mounted main body portion 32c to open upward, which facilitates filling of reserve liquid. In addition, the liquid measure window 46 can easily be provided using the inner wall 55. Reference numeral 32d denotes a cap of the fill port.

In addition, the maintenance window 45 can be opened and closed along with the opening 27b by the large inner lid 40 shared by the opening 27b. Therefore, the lid can be shared and the number of component parts can be reduced. Furthermore, since the maintenance window 45 is not exposed to the external appearance of the vehicle, the external appearance is not likely to deteriorate. Incidentally, what can be juxtaposed to such a storage box 27 is not limited to the reserve tank 32. Other auxiliary instruments can be applicable.

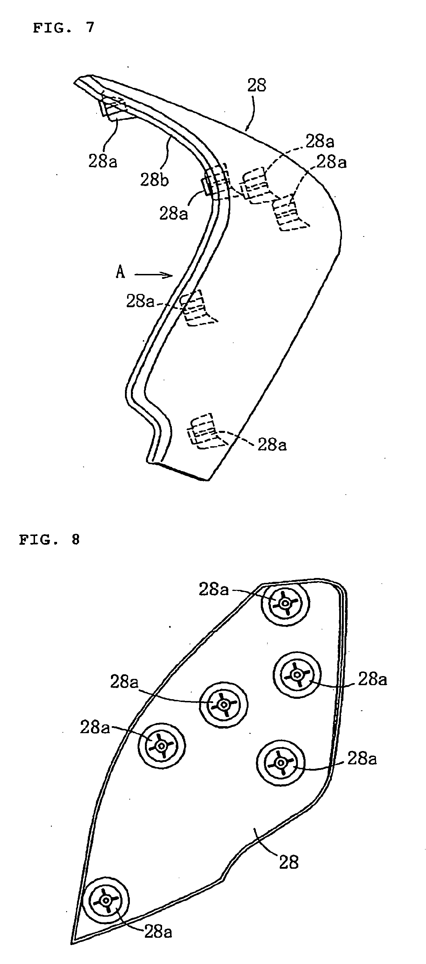

Fig. 7 is a lateral view of the outer lid 28 used for the left side and Fig. 8 is an (internal) view as viewed from arrow A of Fig. 7. The outer lid 28 is molded with resin so as to form a general dogleg (however, no acute bent portion).

As shown in these figures, the outer surface is formed as a relatively simple smooth curved surface, which satisfies the external surface. Reference numeral 28a denotes an integral boss used to attach the inner lid 40. The boss 28a has a leading end projecting obliquely downward.

An opening edge portion 28b bends in a generally doglegged shape as viewed from the side and covers the front surface side of the opening circumferential wall 43. In this case, even if a slight gap is defined between the opening circumferential wall 43 and the opening edge portion 28b, the opening edge portion 28b is shaped to accommodate the gap. This aims to form the outer lid 28 in favor of external appearance because the inner lid 40 can ensure close contact as described later.

Referring to Fig. 8, the outer lid 28 as viewed from the direction of arrow A, i.e., from the longitudinal axial direction of the storage box 27, is formed as a general rhomboid conforming to the shape of the opening circumferential wall 43.

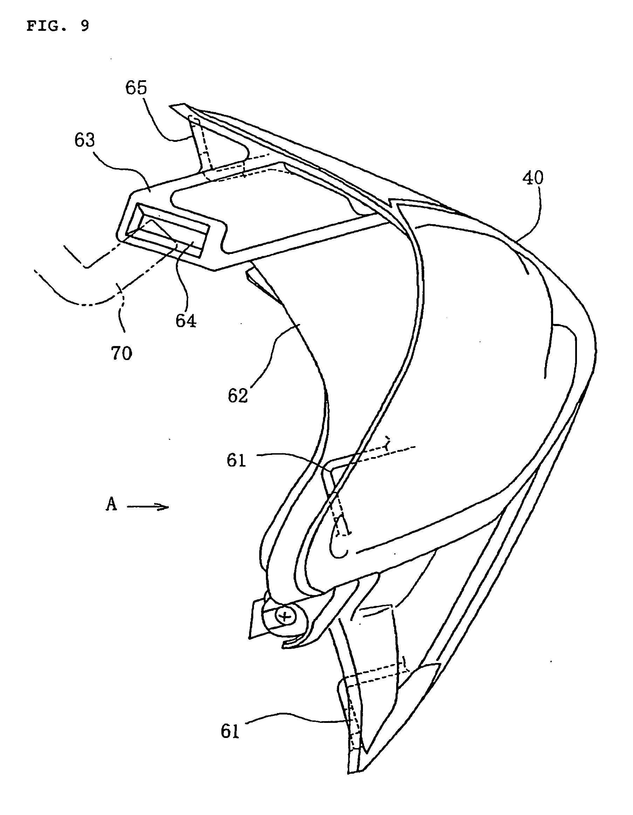

Fig. 9 is a lateral view of the inner lid 40 used for the opening circumferential wall 43 and Fig. 10 is a view as viewed from arrow A of Fig. 9. The inner lid 40 is integrally formed of an outside portion 60 and a sealing wall 62 corresponding to the opening edge portion 52. The outside portion 60 is attached to the bosses 28 formed on the inside of the outer lid 28 to project therefrom. The inner lid 40 is molded with resin so as to bend in a generally dogleg manner as viewed from the side. As shown in Fig. 10, the outside portion 60 is provided to have the same shape as that of the outer lid 28. Reference numeral 61 denotes an attachment seat corresponding to the boss 28a.

The sealing wall 62 corresponds to the opening edge portion 52 and is formed on a full circumference with a sealing groove 67 adapted to receive a seal 41 fitted thereto. The seal 41 hermetically contacts the end surface of the opening edge portion 52. The seal 41 can use a sealing material such as an O-ring or the like. Use of the seal 41 can ensure the hermetical contact of the inner lid 40 with the opening edge portion 52. In addition, although the upper portion of the opening 27a is allowed to recede forward and the opening 27a is covered by the inner lid 40 bent in a generally doglegged shape as viewed from the side, the waterproof can importantly be achieved so as to prevent rainwater flowing into the storage box 27 (the same applies to the side of the opening 27b).

A locking portion 63 is formed on the upper external side of the outside portion 60 so as to project therefrom and the projecting end face thereof is formed with an engaging hole 64. A retaining portion 65 is formed near the locking portion 63 so as to engage the opener 34 (Fig. 2).

A projection serving as a hinge portion 68 is formed to project from a position near the lower portion of the sealing wall 62. The hinge portion 68 is allowed to coincide with and be pivotally attached with the hinge attachment portion 53 (Fig. 4) of the opening circumferential wall 43 with a pin not shown. Thus, the inner lid 40 can be attached to the opening circumferential wall 43 in an openable and closable manner.

Incidentally, as shown in Fig. 9, the inner lid 40 is entirely formed in a generally doglegged shape as viewed from the side similarly to the outer lid 28. However, the inner lid 40 has a complicate curved shape in order to ensure close contact with the opening circumferential wall 43. The curved surface of the inner lid 40 does not coincide with that of the outer lid 28. However, the inner lid 40 can integrally be attached to the outer lid 28 by adjusting the length of each boss 28 of the outer lid 28 although their curved surfaces are different from each other. Incidentally, the right outer lid 28 and inner lid 40 have the same structure.

As described above, since the lid is configured as the dual structure composed of the inner lid 40 and outer lid 28, it can functionally be divided into the inner lid 40 having the sealing surface and the outer lid 28 functioning as an ornamental member. In short, the lid can integrally be formed to have both the functions. Even if the lid having both the functions is intended to be formed of a single part, it is difficult to form a member having a generally doglegged sealing surface by a decorative single part. However, the present invention can easily solve the difficulty by employing the lid of dual structure.

A description is next given of a lock mechanism and an opener mechanism for the inner lid 40. The outer lid 28 is integrally joined with the inner lid 40. The same applies to the right outer lid 28 and inner lid 40.

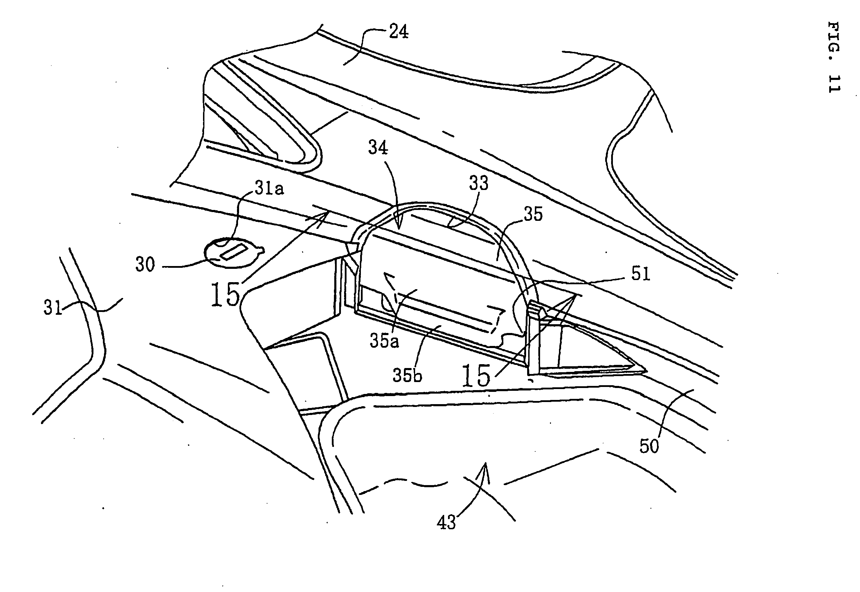

Fig. 11 is a perspective view illustrating the opening circumferential wall 43 with the lid omitted. The opener 34 is attached to the side of the meter cover 24 with the button 35 exposed to the button notch 33 of the meter cover 24. The button 35 includes a downward extending leg portion 35a and a retaining portion 35b located at the lower end of the leg portion 35a to bend generally horizontally. The retaining portion 35b is fitted into the notch 51 formed in the rising wall 50.

As described later, the retaining portion 65 of the inner lid 40 faces the inside of the notch 51 and engages the retaining portion 35b. Depressing the button 35 releases this engagement. The upper inner cover 31 partially overlaps the vicinity of the notch 51. A key hole 31 a is provided in the end upper surface of the upper inner cover 31 to enable key lock operation described later.

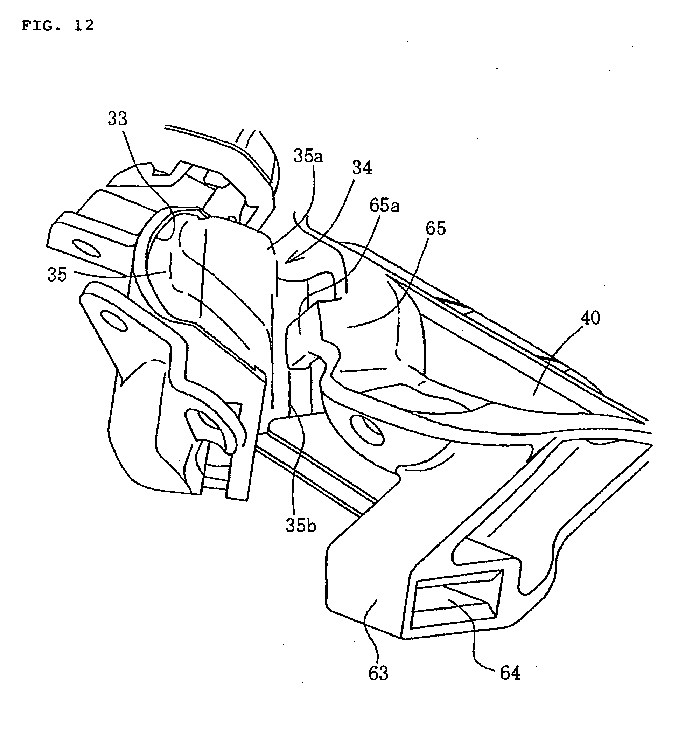

Fig. 12 is a perspective view illustrating an engagement state between the button 35 and the retaining portion 65. The retaining portion 65 formed at an edge of the outside portion 60 of the inner lid 40 has a retaining claw 65, which engages the retaining portion 35b. As described later, since the button 35 is biased to be moved upward, the retaining claw 65a maintains engagement with the retaining portion 35b unless the button 35 is depressed.

The locking portion 63 largely protrudes outwardly in the vicinity of the retaining portion 65 and is formed with an engaging hole 64 at an end face.

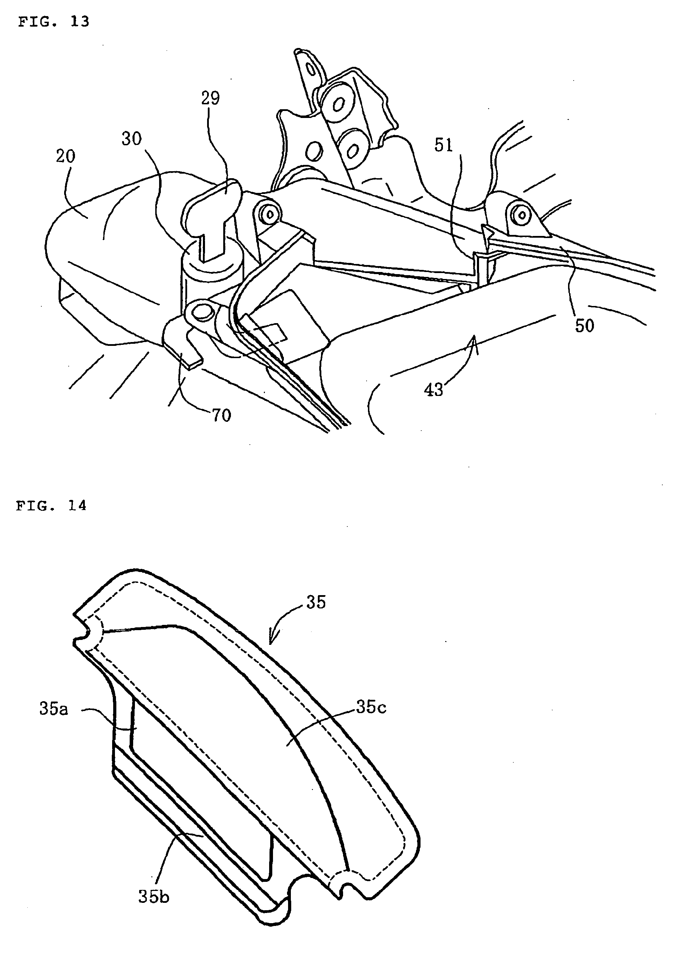

Fig. 13 is a perspective view illustrating the key lock mechanism with the inner lid 40 and the upper inner cover 31 omitted. As shown in the figure, the key cylinder 30 is provided outside the rising wall 50 and inside the front cover 20. The key cylinder 30 is provided with a turnable locking arm 70. The key cylinder 30 can be turned to an unlocking position by inserting the key 29 into the key hole.

In the case of the depicted figure, if the locking arm 70 is turned anticlockwise, the end of the locking arm 70 enters the engaging hole 64 (Fig. 12) of the locking hole 64 to provide a locked state in which the inner lid 40 cannot be opened.

In contrast, if the locking arm 70 is turned clockwise, the end of the locking arm 70 gets out of the engaging hole 64 to provide an unlocked state in which the inner lid 40 can be opened.

As described above, the key lock device and the opener are juxtaposed to each other. During traveling, the key lock device is unlocked and opened or closed by the opener as needed. When parked and left, the vehicle can be prevented from tampering during absence by being locked by the key locking device.

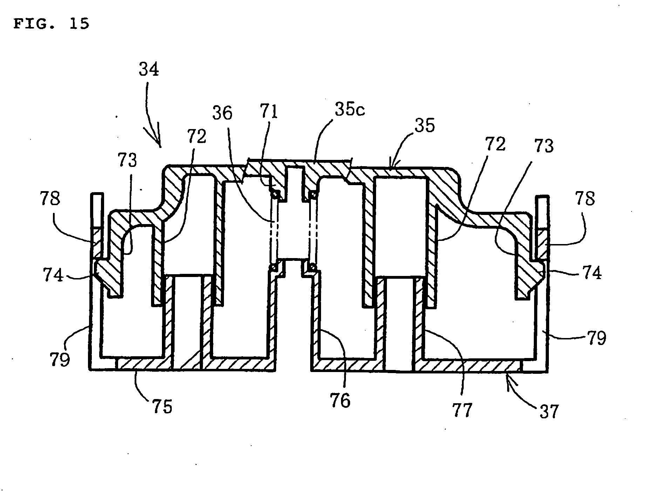

Fig. 14 illustrates the button 35 as viewed from above and Fig. 15 is a cross-sectional view of the opener taken along line 15-15. Referring to Fig. 14, the button 35 includes a pressing portion 35c which faces the button notch 33 and is depressed with a finger. The leg portion 35a extends downward from the pressing portion 35c and the retaining portion 35b is formed at the end of the leg portion 35a. Such a button 35 can be made of a rigid resin or metal.

Referring to Fig. 15, the opener 34 is such that the button 35 is engaged with the case 37 so as to be relatively movable and is biased upward by a return spring 36. The button 35 is provided with a spring seat 71 at the center of the pressing portion 35c and with a pair of downward extending guide tubes 72 on either side thereof. Left and right lateral surfaces 73 are each formed with an engaging projection 74 projecting outwardly.

On the other hand, the case 37 is formed at the center of a bottom 75 with a projecting spring seat 76 corresponding to the spring seat 71. The return spring 36 is attached between the spring seats 71 and 76.

Guide tubes 77 with a small diameter are provided on both, left and right, sides of the spring seat 76 at respective positions corresponding to the guide tubes 72. The guide tubes 72 are externally fitted to the guide tubes 77.

Lateral walls 73 are fitted into the left and right later walls 78. The engaging projections 74 are fitted into corresponding elongate grooves 79 which are formed vertically longwise. In this way, the button 35 is fitted to the case 37 so as to be vertically movable. The case 37 is attached from the lower side to the edge portion 24c of the meter cover 24 with an attachment portion not shown.

In the assembled state shown in Fig. 15, the button 35 is biased by the return spring 36 to move upward so that the engaging projections 74 are retained by the corresponding upper ends of the elongate grooves 79. In this case, the retaining portion 35b is moved upward and comes into a state of engaging the retaining claw 65a shown in Fig. 12.

In this state, if the pressing portion 35c is depressed against the returning spring 36, the engaging projections 74 are guided into the corresponding elongate grooves 79 and the guide tubes 72 are guided into the corresponding guide tubes 77. In addition, the button 35 is moved downward and at the same time the retaining portion 35b is moved downward to release the engagement with the retaining claw 65a. This can release and open the inner lid 40.

Incidentally, if the inner lid 40 is closed, the retaining claw 65a presses and engages the retaining portion 35b. Thereafter, the retaining portion 35b is pressed up by the return spring 36 for engagement without operation of the button 35.

Incidentally, the return spring 36 can use various springs such as a coil spring and the like.

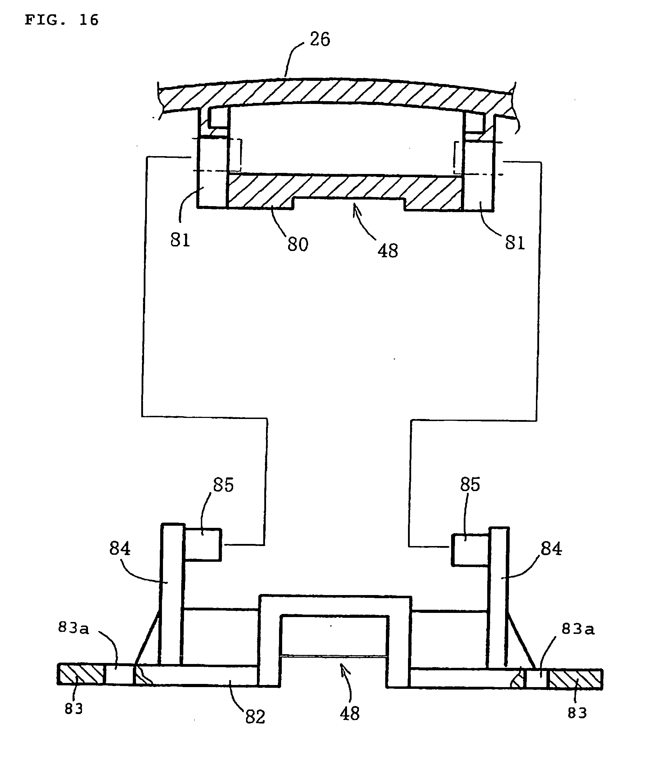

Fig. 16 illustrates a mechanism of the hinge 48 for the filler opening lid 26. The filler opening lid 26 is integrally formed on a rear surface with a pivotal support portion 80. The pivotal support portion 80 is a member projecting in a generally portal manner and includes a transverse section (not shown) and strut portions (not shown) located on the left and right of the transverse section (not shown). The strut portions (not shown) are each formed with an elongate hole 81.

On the other hand, the hinge member 82 is screwed to the attachment seat 56 via attachment holes 83a provided on the left and right of a pedestal 83. In addition, the hinge member 82 is provided with strut portions 84 which parallel project upward from the pedestal 83 to have an interval corresponding to the length of the transverse section (not shown). Shaft portions 85 project inwardly from the corresponding ends of the strut portions 84.

The shaft portions 85 are pressed into the corresponding elongate holes 81 while being elastically deformed, and are allowed to project inwardly from the corresponding elongate holes 81 into the space formed inward of the transverse section (not shown) and between the transverse section (not shown) and the lid 26. Thus, the filler opening lid 26 can be turned around the shaft portions 85.

In this way, the hinge mechanism can be formed with ease. However, the known hinge mechanisms can arbitrarily be used.

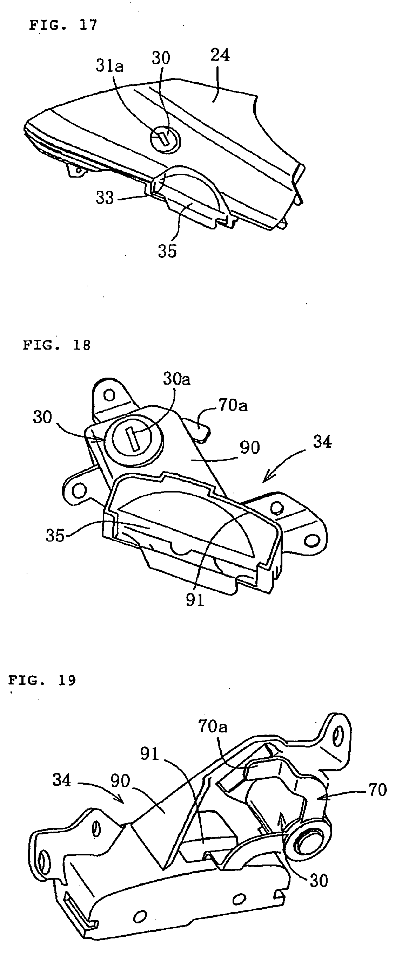

Figs. 17 to 19 illustrate another embodiment in which a key cylinder integrally joined with an opener mechanism. In this embodiment, as shown in Fig. 17, the meter cover 24 is provided with a key hole 31 a near a button notch 33. In addition, a key cylinder 30 (Fig. 18) is provided at this portion inside the meter cover 24. Thus, an opener 34 (Figs. 18 and 19) provided in the button notch 33 is arranged to be integrally joined with the key cylinder 30.

Fig. 18 is a perspective view of the opener 34 integrally joined with the key cylinder 30. The key cylinder 30 is integrally joined with a housing 90 of the opener 34 so that a key insertion portion 30a is exposed to the front surface. A housing portion 91 is provided in a recessed manner at a portion of the housing 90 adjacent to the key insertion portion 30a so as to receive a button 35.

Fig. 19 is a perspective view of the opener 34 as viewed from a different angle. A locking arm 70 provided on the key cylinder 30 is turned by key-operation to allow the leading end 70a to enter the housing portion 91, thereby making it impossible to depress the button 35 (see Fig. 18). This restrains the opening operation of the lid. If the locking arm 70 is reversely turned to allow the leading end 70a to get out of the housing portion 91, it becomes possible to depress the button 35.

In this way, the opener mechanism including the key cylinder 30 can be reduced in size; therefore, assembling performance to the vehicle body is improved.

Incidentally, the present invention is not limited to the embodiments described above but can be modified or applied in various ways within the principles of the invention as described in the claims. For example, the opening shape suffices if its upper portion recedes forward and it is not necessarily needed to be a bent shape. For example, if the opening shape is a simple quadrangle, the object of the present invention can be achieved by forming the opening shape as a shape with an upper side inclined forward.

In addition, while the left storage box is made lockable, the right storage box or both the storage boxes may be made lockable. The left storage box is designed to be able to store the PET bottle. Also this is as described above.

A storage box is made easily viewable and allowed to ensure a sufficient capacity.

Storage boxes 27 are provided at upper left and right portions of an inner cover 25 covering the head pipe 10 from rearward. Opening circumferential walls 43, 44 are provided at the respective opening portions of the storage boxes. An outer lid 28 and an inner lid 40 are provided to cover each of the opening portions in an openable and closable manner. The inner lid 40 is integrally attached to the inside of the outer lid 28 so as to hermetically close the opening 27a. The outer lid 28 is formed as an external appearance member. Such a lid bends in a generally doglegged shape as viewed from the side and the opening 27a is formed such that the upper portion is recessed forwardly.

## Claims

1. A scooter type vehicle having a storage box structure, in which a storage box (27) is provided in a body cover forwardly disposed to face an occupant (6) sitting on a seat (5) and is opened rearward of a vehicle body to form an opening portion (27a, 27b) covered by a lid (28, 40) in an openable and closable manner, the lid (28, 40) is formed to extend along the opening portion end,
wherein a lower surface of the storage box (27) is inclined forwardly downwardly as viewed from the side,
**characterized in that** an upper surface side end of the opening portion (27a, 27b) is recessed toward the vehicle body forward of the storage box (27) as viewed from above, and also a lower surface side end of the opening portion (27a, 27b) is recessed forwardly of the vehicle body, whereby the end of the opening portion (27a, 27b) is formed generally doglegged as viewed from the side,
wherein a maintenance lid (26) is provided below the body cover and near a horizontal center of the vehicle body so as to be openable and closable while jumping upward,
the storage box (27) is arranged as a pair of left and right ones spaced apart from each other,
a pair of left and right lids (28, 40) covering corresponding respective opening portions (27a, 27b) of the storage boxes (27) are each configured to open downward, and
the respective internal lateral edges (28b), in the vehicle width direction, of the lids (28, 40) opening and closing the respective left and right storage boxes (27) are each formed to bend outwardly toward the respective opening portions side ends.

2. The scooter type vehicle according to claim 1, wherein an auxiliary instrument (32) constituting a vehicle body part is disposed near the right storage box (27) inside the body cover, a maintenance opening (45) aiming to maintain the auxiliary instrument (32) is formed around the opening portion (27b) of the right storage box (27), and also the maintenance opening (45) is covered along with the opening portion (27b) of the right storage box (27) by the right lid (28, 40) having an area larger than an opening area of the maintenance opening (45).

3. The scooter type vehicle according to claim 2, wherein the auxiliary instrument (32) is a liquid tank and the maintenance opening (45) at which a filler opening (32a) is located is disposed in an inclined surface close to the upper surface side end of the opening portion (27b) of the right storage box (27).

4. The scooter type vehicle, according to any one of claims 1 to 3, wherein the lids (28, 40) opening and closing the opening portions (27a, 27b) of the storage boxes (27) are doubly-composed of an inner lid (40) with a sealing surface (41) and an outer lid (28) being an ornamental member.

## Patentansprüche

1. Fahrzeug vom Scooter-Typ mit einer Aufbewahrungskastenstruktur, bei der ein Aufbewahrungskasten (27) in einer vorne angeordneten Körperabdeckung vorgesehen ist, um einem auf einem Sitz (5) sitzenden Nutzer (6) gegenüber zu liegen, und rückwärts von einem Fahrzeugkörper geöffnet ist, um einen Öffnungsabschnitt (27a, 27b) auszubilden, welcher durch einen Deckel (28, 40) in einer öffenbaren und schließbaren Weise abgedeckt ist, wobei der Deckel (28, 40) derart ausgebildet ist, dass er sich längs eines Öffnungsabschnittsendes erstreckt,
wobei eine Unterseite des Aufbewahrungskastens (27), von der Seite her gesehen, nach vorne und nach unten geneigt ist,
**dadurch gekennzeichnet, dass** ein oberseitenseitiges Ende des Öffnungsabschnitts (27a, 27b), von oben gesehen, vorwärts von dem Aufbewahrungskasten (27) zu dem Fahrzeugkörper hin zurückgesetzt ist, und auch ein unterseitenseitiges Ende des Öffnungsabschnitts (27a, 27b) vorwärts von dem Fahrzeugkörper zurückgesetzt ist, wodurch das Ende von dem Öffnungsabschnitt (27a, 27b), von der Seite her gesehen, im Allgemeinen abgewinkelt ausgebildet ist,
wobei ein Wartungsdeckel (26) unterhalb der Körperabdeckung und nahe einer horizontalen Mitte des Fahrzeugkörpers derart vorgesehen ist, dass er öffenbar und schließbar ist, während er nach oben aufspringt,
der Aufbewahrungskasten (27) als ein Paar von linken und rechten angeordnet ist, welche voneinander beabstandet sind,
ein Paar von linken und rechten Deckeln (28, 40), welche entsprechende jeweilige Öffnungsabschnitte (27a, 27b) der Aufbewahrungskästen (27) abdecken, jeweils derart ausgebildet sind, dass sie nach unten öffnen, und
die jeweiligen inneren Seitenränder (28b), in der Fahrzeugbreitenrichtung, der Deckel (28, 40), welche die jeweiligen linken und rechten Aufbewahrungskästen (27) öffnen und schließen, jeweils derart ausgebildet sind, dass sie zu den jeweiligen öffnungsabschnittsseitigen Enden nach außen gebogen sind.

2. Fahrzeug vom Scooter-Typ nach Anspruch 1, wobei ein Zusatzinstrument (32), welches ein Fahrzeugkörperteil bildet, nahe dem rechten Aufbewahrungskasten (27) innerhalb der Körperabdeckung angeordnet ist, eine Wartungsöffnung (45), welche darauf abzielt, das Zusatzinstrument (32) instand zu halten, in der Nähe des Öffnungsabschnitts (27b) von dem rechten Aufbewahrungskasten (27) ausgebildet ist, und auch die Wartungsöffnung (45) zusammen mit dem Öffnungsabschnitt (27b) von dem rechten Aufbewahrungskasten (27) durch den rechten Deckel (28, 40) abgedeckt ist, welcher eine Fläche hat, die größer als eine Öffnungsfläche der Wartungsöffnung (45) ist.

3. Fahrzeug vom Scooter-Typ nach Anspruch 2, wobei das Zusatzinstrument (32) ein Flüssigkeitstank ist und die Wartungsöffnung (45), an welcher eine Einfüllöffnung (32a) angeordnet ist, in einer geneigten Fläche nahe dem oberseitenseitigen Ende des Öffnungsabschnitts (27b) von dem rechten Aufbewahrungskasten (27) angeordnet ist.

4. Fahrzeug vom Scooter-Typ nach einem der Ansprüche 1 bis 3, wobei die Deckel (28, 40), welche die Öffnungsabschnitte (27a, 27b) der Aufbewahrungskästen (27) öffnen und schließen, doppelt zusammengesetzt sind aus einem inneren Deckel (40) mit einer Dichtungsfläche (41) und einem äußeren Deckel (28), welcher ein verzierendes Element ist.

## Revendications

1. Véhicule du type scooter comprenant une structure de boîte de stockage, dans lequel une boîte de stockage (27) est prévue dans un couvercle de caisse disposé à l'avant pour faire face à un occupant (6) assis sur un siège (5) et s'ouvre à l'arrière d'une caisse de véhicule pour former une partie formant ouverture (27a, 27b) couverte par un couvercle (28, 40) de manière à pouvoir s'ouvrir et se refermer, le couvercle (28, 40) est formé pour s'étendre le long de l'extrémité de la partie formant ouverture,
dans lequel une surface inférieure de la boîte de stockage (27) est inclinée vers l'avant et vers le bas vue de côté,
**caractérisé en ce qu'**une extrémité latérale de la surface supérieure de la partie formant ouverture (27a, 27b) est en retrait vers la caisse du véhicule à l'avant de la boîte de stockage (27) vue de dessus, et **en ce qu'**une extrémité latérale de la surface inférieure de la partie formant ouverture (27a, 27b) est également en retrait vers l'avant de la caisse du véhicule, moyennant quoi l'extrémité de la partie formant ouverture (27a, 27b) est formée généralement en zigzag vue du côté,
dans lequel un couvercle d'entretien (26) est prévu sous le couvercle de caisse du véhicule et à proximité d'un centre horizontal de la caisse du véhicule de manière à pouvoir s'ouvrir et se fermer en sautant,
la boîte de stockage (27) est agencée sous la forme de deux boîtes gauche et droite espacées l'une de l'autre,
deux couvercles droit et gauche (28, 40) couvrant des parties correspondantes formant ouverture (27a, 27b) respectives des boîtes de stockage (27) sont chacun conçus pour s'ouvrir vers le bas, et
les bords latéraux internes respectifs (28b), dans le sens de la largeur du véhicule, des couvercles (28, 40) ouvrant et fermant les boîtes de stockage gauche et droite (27) respectives sont formés chacun de manière à se courber vers l'extérieur en direction des extrémités latérales des parties formant ouverture respectives.

2. Véhicule de type scooter selon la revendication 1, dans lequel un instrument auxiliaire (32) constituant un élément de la caisse du véhicule est disposé à proximité de la boîte de stockage droite (27) à l'intérieur du couvercle de caisse, une ouverture d'entretien (45) visant l'entretien de l'instrument auxiliaire (32) est formée autour de la partie formant ouverture (27b) de la boîte de stockage droite (27), et l'ouverture d'entretien (45) est également couverte, avec la partie formant ouverture (27b) de la boîte de stockage droite (27), par le couvercle droit (28, 40) ayant une surface plus importante que la surface d'ouverture de l'ouverture d'entretien (45).

3. Véhicule de type scooter selon la revendication 2, dans lequel l'instrument auxiliaire (32) est un réservoir à liquide et l'ouverture d'entretien (45) sur laquelle se trouve une ouverture de remplissage (32a) est disposée dans une surface inclinée à proximité de l'extrémité latérale de la surface supérieure de la partie formant ouverture (27b) de la boîte de stockage droite (27).

4. Véhicule de type scooter selon l'une quelconque des revendications 1 à 3, dans lequel les couvercles (28, 40) ouvrant et fermant les parties formant ouverture (27a, 27b) des boîtes de stockage (27) sont doublement composées d'un couvercle interne (40) doté d'une surface d'étanchéité (41) et d'un couvercle externe (28) qui est un élément décoratif.
